# EUROPEAN PATENT APPLICATION

(11) **EP 1 504 822 A1**
(43) Date of publication of application: **09.02.2005**
(21) Application number: 03723343.4
(22) Date of filing: 13.05.2003
(51) Int. Cl.: B05B 9/04, B65D 83/44

(54) **GAS INJECTION VALVE**

(30) Priority: 16.05.2002 JP 2002141250
(71) Applicant: Bioactis Limited, Tokyo 100-0006 (JP)
(72) Inventor: Tsutsui, Tatsuo, Atsugi-Mouridai Diamond Mansion, Atsugi-shi, Kanagawa 243-0036 (JP)
(74) Representative: Banzer, Hans-Jörg, Dipl.-Ing.
(86) International application number: PCT/JP2003/005925
(87) International publication number: WO 2003/097249

(57) **Abstract**

A gas injection valve designed for long-term storage of liquefied carbon dioxide, adapted to minimize the permeation of carbon gas through a seal ring even if used for a long time, thus solving the problems including an increase in injection concentration of the contents and a decrease in the number of times of spraying. Particularly, it is arranged that a seal ring (17) closely contacts the three surfaces of a seal ring holding groove (18) holding the seal ring (17), and the outer peripheral surface of a valve pin, whereby the gas permeation area of the seal ring (17) is reduced to a half or less of the conventional valve. Further, the seal ring (17) is made of an elastic material whose carbon dioxide gas permeability is low, thereby greatly reducing the amount of gas permeation through the seal ring (17).

## Description

### TECHNICAL FIELD

The present invention relates to a gas injection valve for injecting contents filled in a gas container by using liquefied carbon dioxide gas as a propellant, and to a gas injection valve in which improvements are made on the leakage and permeation of carbon dioxide gas at sealing portions during storage and in long-term use.

### BACKGROUND ART

Conventionally, there have been used systems in which contents such as medical agents are filled into a gas container along with a gas, and the contents are injected out of a gas injection valve fixed to and installed on an opening of the gas container under the gas pressure. Injection systems of this type have conventionally used chlorofluorocarbons as the propellant, whereas ones using chlorofluorocarbon substitutes are now becoming available in view of influence on the ozone layer.

Nevertheless, while they have no effect on the ozone layer, these chlorofluorocarbon substitutes have a significant impact on global warming. Various measures against this, similar to those against chlorofluorocarbons, are thus expected to be taken in the future. In these days, it has thus been contemplated to use carbon dioxide gas, nitrogen gas, and inactive gases including helium, neon, and krypton, which have smaller impacts on global environment and are safe for even the human body, as the propellants of the injection systems.

By the way, when such gases are used as the propellants of the injection systems, it is desirable that the gases be liquefied like the existing chlorofluorocarbons for the sake of compatibility with the medical agents and miniaturization of the gas containers. With liquefied carbon dioxide gas, for example, the vapor pressure at 20°C is 58.4 kgf/cm². It is preferred that other gases be also highly compressed or liquefied for improved volumetric efficiency. In particular, they are desirably used at pressures not lower than 50 kgf/cm².

For an injection valve using such a high-pressure gas as its propellant, one such as described in Japanese Patent Laid-Open Publication No. Hei 11-267557 has been devised heretofore.

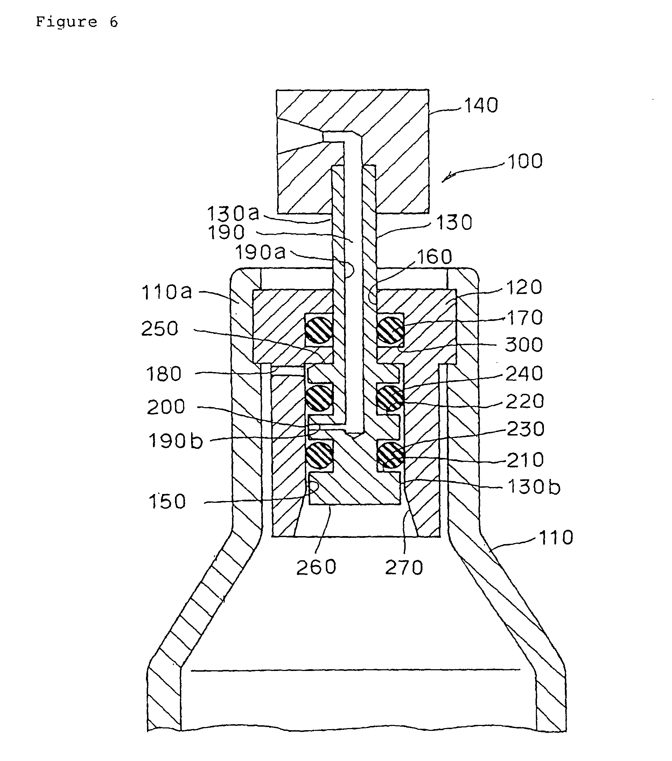

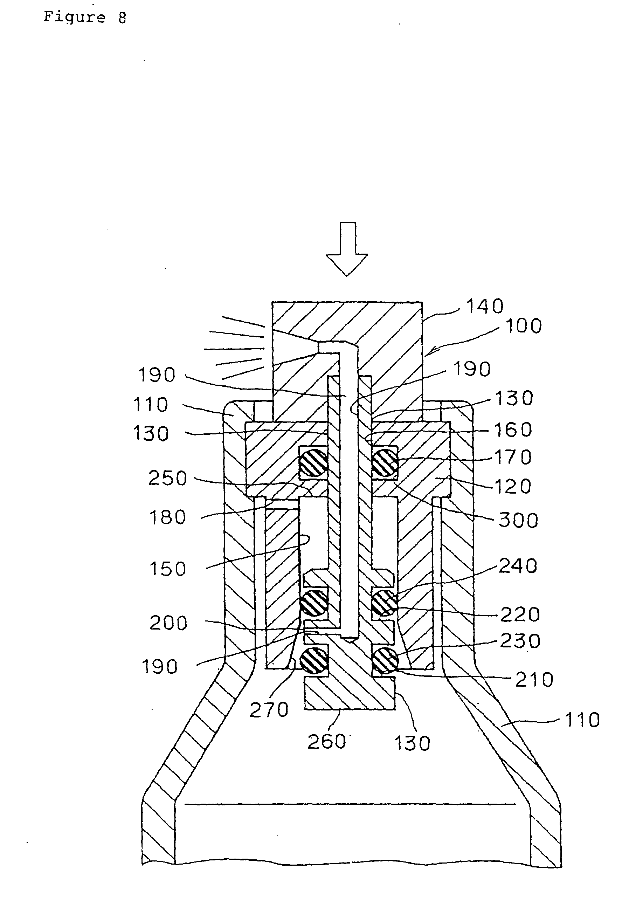

As shown in Figs. 6 and 8, this gas injection valve has a valve case 120 which is fixed to the opening of a gas container 110. A valve pin 13 for opening and closing a channel opening 190 by a push-in operation from exterior of the gas container 110 is supported by the valve case 120 so as to be capable of moving back and forth. The valve pin 130 comprises an ordinary part 130a which is in tight contact with a second seal ring 170 arranged in the valve case 120, and a piston part 130b which lies below this ordinary part 130a. In a steady state where the valve pin 130 is not pushed in, a first seal ring 230 and a third seal ring 240 of the piston part 13b each make tight contact with the surface of a cylinder hole 150 in the valve case 120, whereby the channel opening 190 mentioned above is kept in a blocked state.

Since this gas injection valve has the foregoing configuration, the third seal ring 240 is in tight contact with the surface of the cylinder hole 150 in the valve case 120 when the extremity of the valve pin 130 is pushed in from exterior of the gas container 110. Meanwhile, the first seal ring 23 moves to a tapered surface 270 lying below the cylinder hole 150. This establishes communication between the interior of the gas container 110 and the communication opening 190, and the contents of the gas container 110 are then injected out along with the gas.

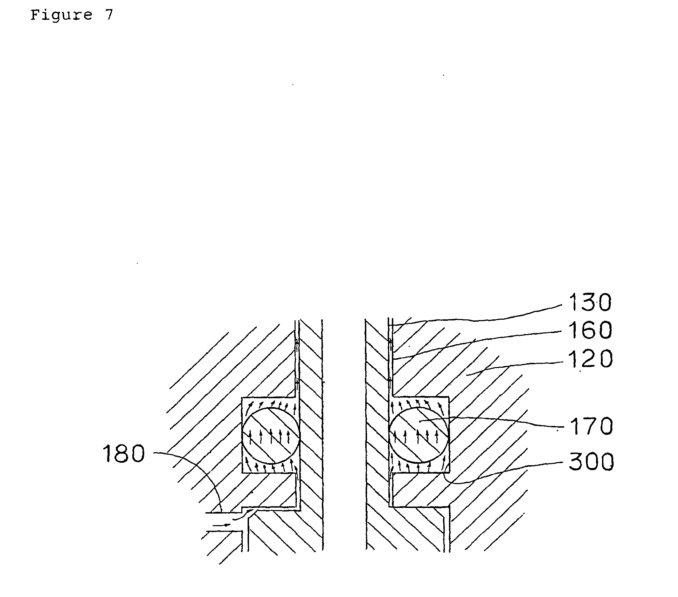

In the conventional gas injection valve described above, however, the second seal ring 170 intended to prevent the gas inside the gas container 110 from leaking outside causes the phenomenon that a relatively large amount of high-pressure gas permeates the second seal ring 170 to dissipate outside as shown in Fig. 7.

In particular, when liquefied carbon dioxide gas having a gas permeability 15 times or more that of nitrogen gas is used as the propellant, the amount of permeation of the gas through the second seal ring 170 becomes large during long-term storage and long-term use. For example, if the seal ring 170 is made of a NBR (nitrile rubber) having a rubber hardness of 60 degrees, which is a typical sealing material, and a gas container having a capacity of 10 cc is filled 60% with liquefied carbon dioxide gas at 20°C, then 40% or more of the carbon dioxide gas can dissipate outside during one year of storage at room temperature. As a result, there occur such impractical defects that the contents to be injected from the gas container increase in concentration excessively, and that a predetermined number of injections can no longer be secured.

In general, the amount of permeation of gas is in proportion to the area of the object to be permeated on which the gas pressure is loaded. In the foregoing phenomenon, the gas pressure is loaded all over the surface of the second seal ring 170 facing toward the interior of the gas container 110. This shows that a large amount of gas permeates the second seal ring 170.

Then, focusing attention on the design of the annular groove for accommodating a seal ring and the material of the seal ring, the present invention is to provide a gas injection valve of sufficient practicability in which the amount of permeation of carbon dioxide gas through the seal ring is made extremely small so that the concentration of the contents to be injected is stabilized and a predetermined number of injections is secured.

### DISCLOSURE OF THE INVENTION

As means for solving the foregoing problem, a gas injection valve of the present invention according to claim 1 is a gas injection valve in which: a valve pin is held by a valve case fixed to an opening of a liquefied carbon dioxide gas container, so as to be capable of moving back and forth; a seal ring for establishing sealing between the valve case and the valve pin is attached to an inner periphery of this valve case; and the valve pin is provided with a gas channel for establishing communication between exterior of the gas container and a part of the gas container lying inner than the seal ring in the valve case when the pin is pushed in from exterior. An annular space for accommodating the seal ring is formed so that the seal ring is in tight contact with all of three sides, or a bottom and both sides, of a holding groove of the valve case for holding the seal ring, and an outer periphery of the valve pin. The seal ring is made of an elastic material having a rubber hardness of 65 degrees or higher.

In this invention, the seal ring is in tight contact with all of the bottom and both sides of the holding groove for holding the seal ring and the outer periphery of the valve pin. This reduces the load of the high gas pressure of the liquefied carbon dioxide gas to or below a half of that on the surface of a seal ring that faces toward the interior of the gas container. The amount of permeation of the gas decreases accordingly.

Moreover, the gas permeability of the seal ring differs considerably with a material used, and varies with rubber hardness as well. While it is desirable to use a seal ring made of a material having gas permeability as low as possible, there has not been known any particular material or rubber hardness setting suitable for liquefied carbon dioxide gas, which were thus determined by carbon dioxide gas permeation experiments. As a result, it was found that elastic materials having rubber hardnesses of 65 degrees or higher, i.e., in particular, HNBR (hydrogenated nitrile rubber), IIR (butyl rubber), CSM (chlorosulfonated polyethylene), CO (epichlorohydrin rubber), U (urethane rubber), and T (polysulfide rubber), have low permeability to carbon oxide gas.

### BRIEF DESCRIPTION OF THE DRAWINGS

Fig. 1 is a sectional view showing a first embodiment of the gas injection valve of the present invention;
Fig. 2 is a detailed partial view of the embodiment;
Fig. 3 is a sectional view showing the embodiment;
Fig. 4 is a sectional view showing a second embodiment of the gas injection valve of the present invention;
Fig. 5 is a sectional view showing a third embodiment of the gas injection valve of the present invention;
Fig. 6 is a sectional view showing a gas injection valve of the conventional technique;
Fig. 7 is a detailed partial view of the same; and
Fig. 8 is a sectional view showing the gas injection valve of the conventional technique.

The individual numerals have the following means:
- 10: gas injection valve
- 11: valve case
- 11a: upper part
- 11b: lower part
- 12: valve pin
- 13: gas channel hole
- 13a: axial hole
- 13b: orifice hole
- 14: stopper flange
- 16: guide hole
- 17: seal ring
- 18: seal ring holding groove
- 18a: upper side
- 18b: lower side
- 18c: bottom
- 30: gas container
- 31: gas container opening
- 40: nozzle button
- 50: lower block
- 51: upper block

### BEST MODE FOR CARRYING OUT THE INVENTION

Hereinafter, a gas injection valve to be provided by the present invention will be described in conjunction with specific embodiments with reference to the drawings.

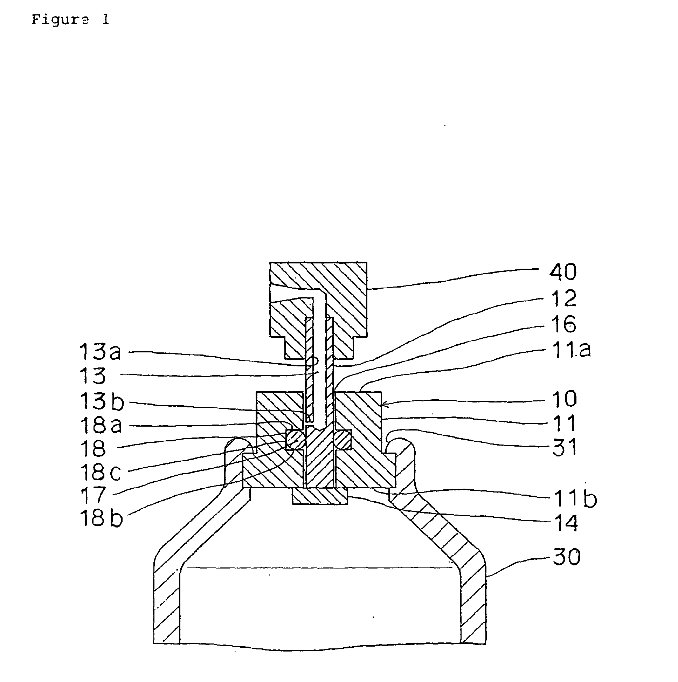

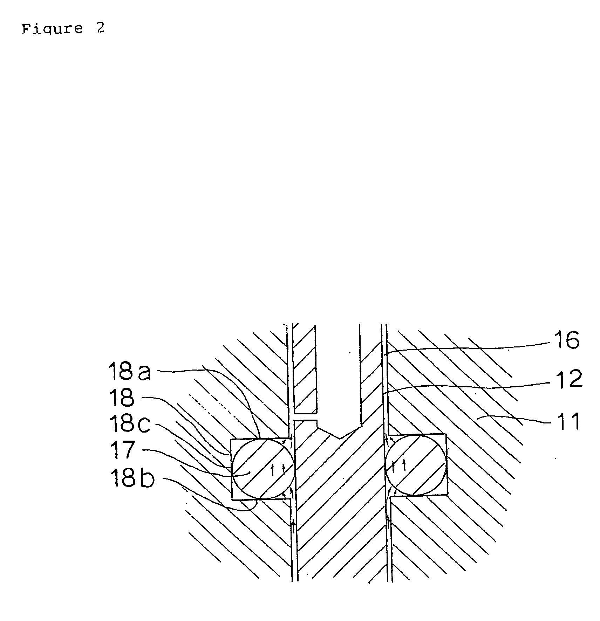

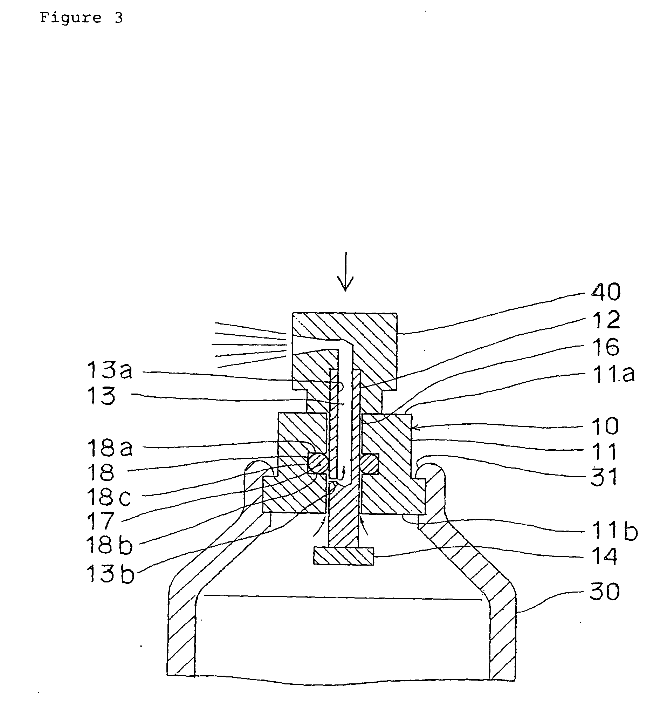

Initially, a first embodiment of the gas injection valve of the present invention will be described with reference to Figs. 1 to 3.

Fig. 1 shows an injection system using a gas injection valve 10 according to the present invention. In this injection system, the gas injection valve is hermetically attached to a gas container 30 which is filled with liquefied carbon dioxide gas and contents such as medical agents.

The gas injection valve 10 comprises a valve case 11 which is fixed airtightly to a gas container opening 31 of the gas container 30 by caulking, and a valve pin 12 which is held by this valve case 11 so as to be capable of moving back and forth. A nozzle button 40 having both a nozzle function and a push button function is fitted and fixed to the extremity of the valve pin 12 which protrudes upward from the valve case 11.

A guide hole 16 for the valve pin 12 to be fitted into is formed in the axial central area of the valve case 11 along the axial direction. A seal ring holding groove 18 having a U-shaped section, which opens toward the axial center, is formed generally in the axial central position of this guide hole 16. A seal ring 17 made of an elastic material is held inside the seal ring holding groove 18.

Then, this seal ring holding groove 18 is set so that the seal ring 17 makes tight contact with all of its three sides, or a bottom 18c, an upper side 18a, and a lower side 18b, and the outer periphery of the valve pin 12.

Meanwhile, a gas channel hole 13 for establishing communication between the top end and the outer periphery of the valve pin 12 at a predetermined distance away from the top end axially is formed in the extremity side of this valve pin 12 protruding upward from the valve case 11. Specifically, this gas channel hole 13 is made of an axial hole 13a which is formed along the axial direction from the top end of the valve pin 12, and an orifice hole 13b which is formed along the radial direction to establish communication between the bottom of this axial hole 13a and the outer periphery of the valve pin 12. Then, this orifice hole 13b is set so that it opens to where closer to the exterior of the gas container 30 than the seal ring 17 when the valve pin 12 is in the lifted position, and opens to where closer to the interior of the gas container 30 than the seal ring 17 when the valve pin 12 is pushed in from exterior.

A stopper flange 14 is formed integrally on the lower part of the valve pine 12 which lies inside the gas container 30. This stopper flange 14 comes into contact with the underside of the valve case 11 to restrain the lifting displacement of the valve pin 12.

Since this gas injection valve 10 has the foregoing configuration, the valve pin 12 is impelled to the topmost position by the gas pressure inside the gas container 30 and the orifice hole 13b lies above the seal ring 17 while the nozzle button 40 is not pushed in. Here, the gas channel opening 13 is thus out of communication with the interior of the gas container 30.

Then, when the nozzle button 40 is pushed in from this state, the valve pin 12 lowers to a position closer to the interior of the gas container 30 than the seal ring 17. The gas inside the gas container 30 is injected outside through the gas channel opening 13 and the hole in the nozzle button 40 along with the contents.

Concerning the gas dissipation from the guide hole 21 when this gas injection valve 10 is not in use such as during storage, the seal ring 17 is in tight contact with all the three sides, or the bottom 18c, the upper side 18a, and the lower side 18b, of the seal ring holding groove 18 for holding the seal ring 17 and the outer periphery of the valve pin 12. This precludes the high-pressure carbon dioxide gas having high gas permeability from being loaded all over the surface of the seal ring 17 facing toward the interior of the gas container 30 as in the conventional technique, and the loaded area decreases to a half or less. Since the amount of permeation of the gas is in proportion to the area of the object to be permeated on which the gas pressure is loaded, it is possible to reduce the amount of permeation of the gas accordingly with reliability.

Moreover, from carbon dioxide gas permeation experiments, elastic materials having low gas permeability were determined as the material of this seal ring 17. As a result, HNBR (hydrogenated nitrile rubber), IIR (butyl rubber), CSM (chlorosulfonated polyethylene), CO (epichlorohydrin rubber), U (urethane rubber), and T (polysulfide rubber), which are elastic materials having low permeability to carbon dioxide gas and rubber hardnesses of 65 degrees or higher, could be used to reduce the gas permeability of the seal ring 17 with reliability.

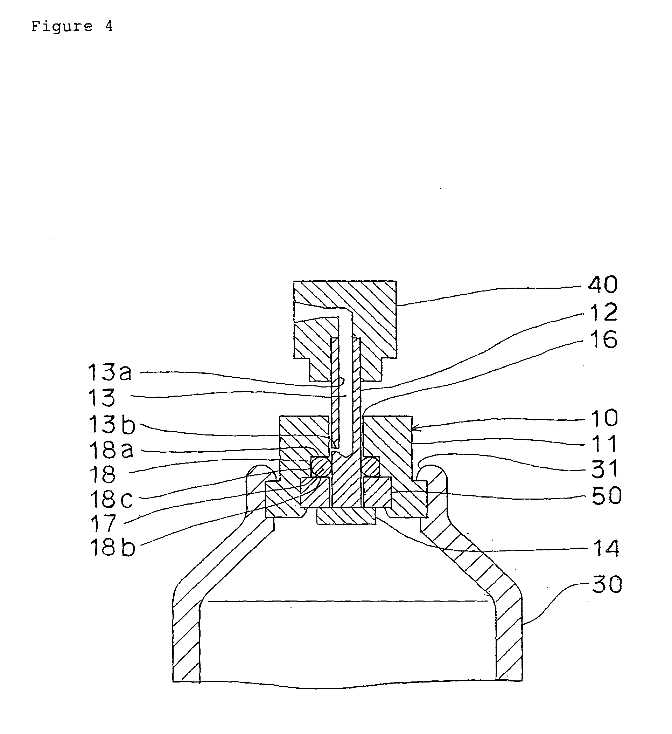

Next, a second embodiment of the gas injection valve of the present invention shown in Fig. 4 will be described. Incidentally, the gas injection valve 10 of this embodiment has the same basic configuration as that of the first embodiment shown in Fig. 1 except the valve case 11. The same parts will thus be designated by identical numerals, and overlapping description will be omitted.

The valve case 11 of this gas injection valve 10 is configured so that a part of the valve case 11 closer to the interior of the gas container 30 than the lower side 18b of the seal ring holding groove 18 is separated into a lower block 50. This lower block 50 is fixed airtightly by caulking the bottom 11b at the underside of the valve case 11. As in the first embodiment, this precludes the high-pressure carbon dioxide gas from being loaded all over the surface of the seal ring 17 facing the interior of the gas container 30. The loaded surface is a half or less as in the first embodiment, and it is possible to reduce the amount of permeation of the carbon dioxide gas accordingly with reliability.

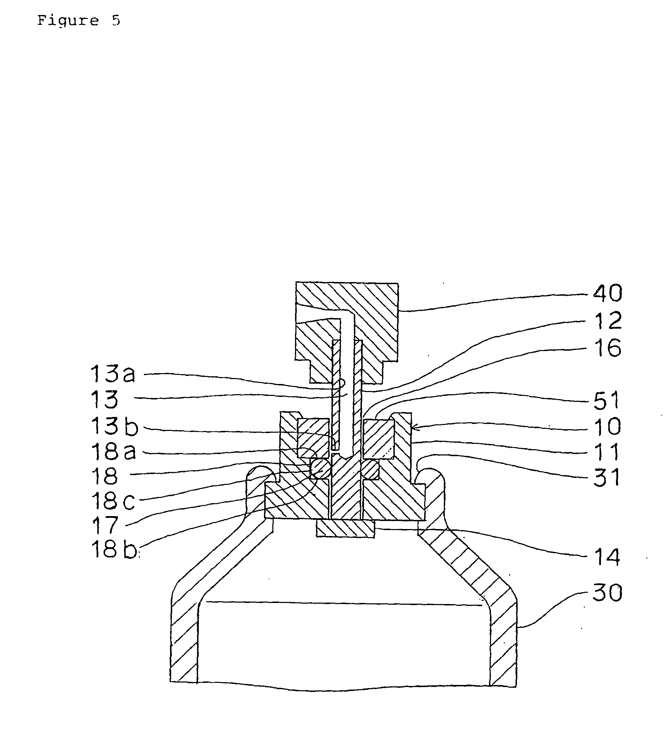

Incidentally, in the second embodiment described above, in order to form the seal ring holding groove 18, the part of the valve case 11 lying closer to the interior of the gas container 30 than the lower side 18b of the seal ring holding groove 18 is separated into the lower block 50. This lower block 50 is then fixed airtightly by caulking the bottom 11b at the underside of the valve case 11. On the other hand, as in a third embodiment shown in Fig. 5, a part of the valve case 11 lying closer to the exterior of the gas container 30 than the upper side 18a of the seal ring holding groove 18 may be separated into an upper block 51. By caulking the upper part 11a at the topside of the valve case 11, this upper block 51 can also be fixed airtightly to reduce the amount of permeation of the gas with reliability as in the first and second embodiments.

### INDUSTRIAL APPLICABILITY

As has been described above, the gas injection valves of the present invention provided by claims 1 to 7 are ones in which the seal ring is put into tight contact with all the three sides, or the bottom, upper side, and lower side, of the seal ring groove for holding the seal ring and the outer periphery of the valve pin. Consequently, even with the high-pressure carbon dioxide gas having high gas permeability as in the conventional technique, the gas pressure will not be loaded all over the surface of the seal ring facing toward the interior of the gas container, and the loaded area decreases to a half or less. The amount of permeation of the gas can thus be reduced by half with reliability, allowing a significant improvement at low cost equivalent to in the conventional technique.

Then, even for the material of the seal ring, elastic materials having low gas permeability were determined through carbon dioxide gas permeation experiments. As a result, HNBR (hydrogenated nitrile rubber), IIR (butyl rubber), CSM (chlorosulfonated polyethylene), CO (epichlorohydrin rubber), U (urethane rubber), and T (polysulfide rubber), having rubber hardnesses of 65 degrees or higher, are used to allow a further reduction in the amount of permeation of the carbon dioxide gas through the seal ring. This also allows an improvement at low cost equivalent to in the conventional technique.

Thus, according to the present invention, it is possible to make the permeation of the carbon dioxide gas extremely small even when the liquefied carbon dioxide gas container is put to long-term storage and long-term use. This provides the advantages that the concentration of the contents to be injected will not increase excessively, and that it is possible to resolve the problem of occurrence of such impractical defects that a predetermined number of injections cannot be secured.

## Claims

1. A gas injection valve in which: a valve pin is held by a valve case fixed to an opening of a liquefied carbon dioxide gas container, so as to be capable of moving back and forth; a seal ring for establishing sealing between the valve case and the valve pin is attached to an inner periphery of this valve case; and the valve pin is provided with a gas channel for establishing communication between exterior of the gas container and a part of the gas container lying inner than the seal ring in the valve case when the pin is pushed in from exterior, wherein
an annular space for accommodating the seal ring is formed so that the seal ring is in tight contact with all of three sides, or a bottom and both sides, of a holding groove of the valve case for holding the seal ring, and an outer periphery of the valve pin; and the seal ring is made of an elastic material having a rubber hardness of 65 degrees or higher.

2. The gas injection valve according to claim 1, wherein
the seal ring is made of HNBR (hydrogenated nitrile rubber) having a rubber hardness of 65 degrees or higher.

3. The gas injection valve according to claim 1, wherein
the seal ring is made of IIR (butyl rubber) having a rubber hardness of 65 degrees or higher.

4. The gas injection valve according to claim 1, wherein
the seal ring is made of CSM (chlorosulfonated polyethylene) having a rubber hardness of 65 degrees or higher.

5. The gas injection valve according to claim 1, wherein
the seal ring is made of CO (epichlorohydrin rubber) having a rubber hardness of 65 degrees or higher.

6. The gas injection valve according to claim 1, wherein
the seal ring is made of U (urethane rubber) having a rubber hardness of 65 degrees or higher.

7. The gas injection valve according to claim 1, wherein
the seal ring is made of T (polysulfide rubber) having a rubber hardness of 65 degrees or higher.
